# EUROPÄISCHE PATENTSCHRIFT

(11) **EP 1 223 094 B1**
(45) Veröffentlichungstag und Bekanntmachung des Hinweises auf die Patenterteilung: **12.11.2003**
(21) Anmeldenummer: 01130146.2
(22) Anmeldetag: 19.12.2001
(51) Int. Cl.: B61D 17/00, B61D 17/04, B62D 27/02

(54) **Grossräumiges Fahrzeug, insbesondere Schienenfahrzeug, mit geklebtem Fahrzeugkopf aus Kunststoff**
Large sized vehicle, especially railway vehicle, with bonded plastic head module
Véhicule de grande taille, notamment véhicule ferroviaire, avec module de tête collé en matériau plastique

(30) Priorität: 13.01.2001 DE 10101362
(43) Veröffentlichungstag der Anmeldung: 17.07.2002
(73) Patentinhaber: SIEMENS AKTIENGESELLSCHAFT, 80333 München (DE)
(72) Erfinder: Engels, Gerhard, 52146 Würselen (DE)

(56) Entgegenhaltungen:
- DE-A- 4 343 800
- US-A- 5 916 093
- US-A- 6 134 787
- STARLINGER A ET AL: "DIE FRONTKABINE DER NEUEN AEG-HOCHLEISTUNGSLOKOMOTIVE 12X IN GFK-SANDWICHBAUWEISE" ZEITSCHRIFT FUR EISENBAHNWESEN UND VERKEHRSTECHNIK. DIE EISENBAHNTECHNIK + GLASERS ANNALEN, GEORG SIEMENS VERLAGSBUCHHANDLUNG. BERLIN, DE, Bd. 119, Nr. 9/10, 1. September 1995 (1995-09-01), Seiten 493-500, XP000542119 ISSN: 0941-0589

## Beschreibung

Die Erfindung betrifft ein großräumiges Fahrzeug, insbesondere Schienenfahrzeug, mit einem Wagenkasten-Rohbau aus Metall und einem Fahrzeugkopf aus faserverstärktem Kunststoff, der durch Kleben mit dem Rohbau verbunden ist.

Ein Fahrzeug mit den vorgenannten Merkmalen ist durch den in der Fachzeitschrift Verkehr und Technik 2000, Heft 3, Seiten 83 bis 89 erschienenen Aufsatz "Siemens Triebzug "DESIRO" - DB BR 642 - einsatzbereit" bekannt. Gemäß Bild 2 auf Seite 84 und zugehöriger Beschreibung Seite 83 unten und Seite 84 linke Spalte ist der Rohbau des Wagenkastens aus Aluminium-Strangpressprofilen gebildet. Der Fahrzeugkopf besteht aus einer selbsttragenden GFK-Sandwich-Konstruktion, die eine innere Schale, eine äußere Schale und einen Kern aus Hartschaum aufweist. Der komplette Fahrzeugkopf ist über eine Dickschichtverklebung direkt mit dem Rohbau verbunden.

Der Erfindung liegt die Aufgabe zugrunde, bei einem Fahrzeug der gattungsgemäßen Art die Verbindung zwischen Wagenkasten-Rohbau und Fahrzeugkopf hinsichtlich ihrer Stabilität durch eine in diese Verbindung integrierte mechanische Abstützung zu erhöhen.

Diese Aufgabe wird erfindungsgemäß dadurch gelöst, daß am Rohbau ein als Portal ausgeführtes Profil mit einer nach außen offenen U-förmigen Aufnahme befestigt ist, in die ein nach innen gerichteter umlaufender Schenkel des Fahrzeugkopfes eingreift und verklebt ist.

Vorteilhafte Ausgestaltungen der Erfindung sind in den Unteransprüchen angegeben.

Im weiteren wird die Erfindung anhand eines Ausführungsbeispiels näher beschrieben, das in der Zeichnung prinzipartig dargestellt ist. Es zeigen
- Fig. 1: die Kopfpartie eines Schienenfahrzeuges in Seitenansicht,
- Fig. 2: den Schnitt nach der Linie II - II in Fig. 1,
- Fig. 3: den vergrößerten Längsschnitt im Dachbereich Z in Fig. 1.

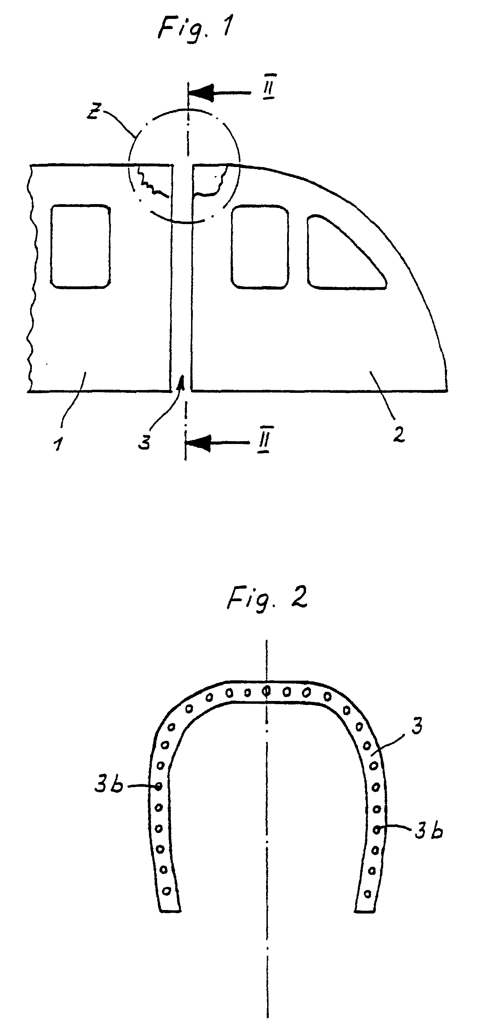

Das Schienenfahrzeug hat einen Wagenkasten-Rohbau 1, der in konventioneller Bauweise aus Aluminium-Strangpressprofilen gebildet sein kann. Eine in Fig. 1 nicht dargestellte plattenförmige Struktur das Rohbaues 1 untergreift im Sinne einer Vertikalabstützung einen Fahrzeugkopf 2, der aus faserverstärktem Kunststoff besteht und selbsttragend ausgeführt ist.

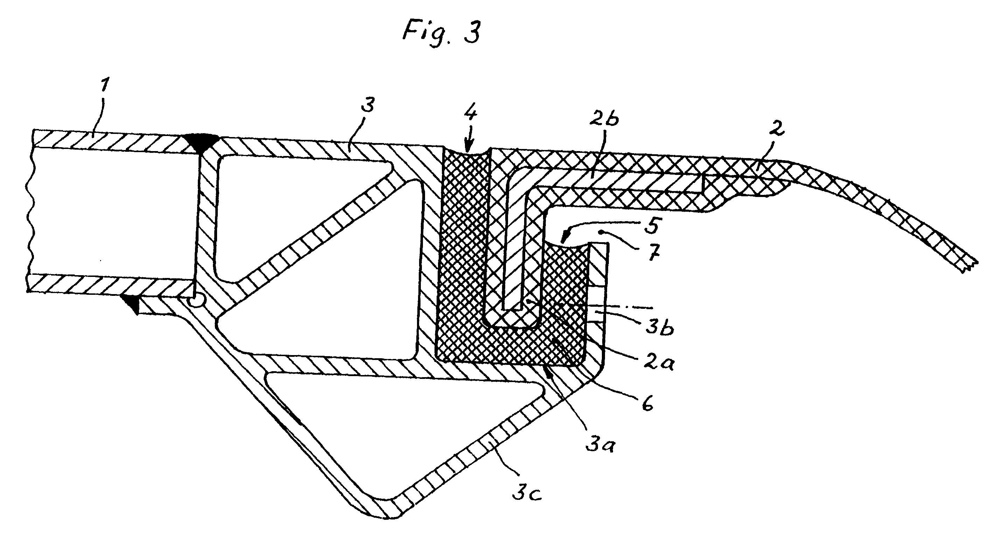

Am Wagenkasten-Rohbau 1 ist ein als Portal ausgeführtes Profil 3 aus ebenfalls Aluminium vorzugsweise durch Schweißen befestigt. Dieses Profil 3 hat eine nach außen offene U-förmige Aufnahme 3a (siehe Fig. 3). In diese Aufnahme 3a des Profils 3 wird, nach erfolgtem Anstrich des Rohbaues 1, der gleichfalls lackierte Fahrzeugkopf 2 eingehängt und ausgerichtet. Ein nach innen gerichteter umlaufender Schenkel 2a des Fahrzeugkopfes 2 greift dann in die U-förmige Aufnahme 3a des portalartigen Profils 3 ein, wobei zwischen der U-förmigen Aufnahme 3a und dem umlaufenden Schenkel 2a des Fahrzeugkopfes 2 auf beiden Seiten ein Spalt 4 bzw. 5 besteht.

Nach dem besagten Einhängen und Ausrichten des Fahrzeugkopfes 2 werden die Spalte 4 und 5 durch Klebstoff 6 ausgefüllt. Der Spalt 4 wird von außen soweit mit Klebstoff 6 ausgefüllt bis eine möglichst ebene Außenfläche mit dem Rohbau 1 und dem Fahrzeugkopf 2 vorliegt. Für das Befüllen des anderen Spaltes 5 mit Klebstoff 6 weist die U-förmige Aufnahme 3a des portalartigen Profils 3 auf ihrem Umfang gleichmäßig verteilt angeordnete Bohrungen 3b auf (siehe auch Fig. 2). Der Klebstoff 6 bewirkt auch einen abgedichteten Anschluß des Fahrzeugkopfes 2 an den Rohbau 1.

Der aus Fig. 3 ersichtliche, umlaufende Freiraum 7 zwischen dem Fahrzeugkopf 2 und der U-förmigen Aufnahme 3a des Portals 3 ist derart dimensioniert, daß auch bei einem bombiert gestalteten Rohbau 1 das Einhängen des Fahrzeugkopfes 2 von oben ausführbar ist.

Aus Festigkeitsgründen ist das portalartige Profil 3 mit einer die Biegesteifigkeit seiner U-förmigen Aufnahme 3a vergrößernden Verstärkungsrippe 3c versehen. Im Übergangsbereich des Fahrzeugkopfes 2 und seines nach innen gerichteten umlaufenden Schenkels 2a ist ein metallisches Verstärkungsprofil 2b einlaminiert, das ebenfalls zu der gewollten hohen Stabilität der Verbindung zwischen Rohbau 1 und Fahrzeugkopf 2 beiträgt.

### Liste der Bezugszeichen

- 1: Wagenkasten-Rohbau
- 2: Fahrzeugkopf
- 2a: umlaufender Schenkel
- 2b: metallischer Verstärkungswinkel
- 3: portalartiges Profil
- 3a: U-förmige Aufnahme
- 3b: Bohrung
- 3c: Verstärkungsrippe
- 4: Spalt
- 5: Spalt
- 6: Klebstoff
- 7: Freiraum

## Patentansprüche

1. Großräumiges Fahrzeug, insbesondere Schienenfahrzeug, mit einem Wagenkasten-Rohbau (1) aus Metall und einem Fahrzeugkopf (2) aus faserverstärktem Kunststoff, der durch Kleben mit dem Rohbau (1) verbunden ist, **dadurch gekennzeichnet, daß** am Rohbau (1) ein als Portal ausgeführtes Profil (3) mit einer nach außen offenen U-förmigen Aufnahme (3a) befestigt ist, in die ein nach innen gerichteter umlaufender Schenkel (2a) des Fahrzeugkopfes (2) eingreift und verklebt ist.

2. Großräumiges Fahrzeug nach Anspruch 1, **dadurch gekennzeichnet, daß** zwischen der U-förmigen Aufnahme (3a) des portalartigen Profils (3) und dem umlaufenden Schenkel (2a) des Fahrzeugkopfes (2) auf beiden Seiten ein Spalt (4, 5) besteht, wobei diese Spalte (4, 5) durch Klebstoff (6) ausgefüllt sind.

3. Großräumiges Fahrzeug nach Anspruch 2, **dadurch gekennzeichnet, daß** die U-förmige Aufnahme (3a) des portalartigen Profils (3) auf ihrem Umfang verteilt angeordnete Bohrungen (3b) für das Füllen des Spaltes (5) mit Klebstoff (6) aufweist.

4. Großräumiges Fahrzeug nach einem der Ansprüche 1 bis 3, **dadurch gekennzeichnet, daß** das portalartige Profil (3) mit einer die Biegesteifigkeit seiner U-förmigen Aufnahme (3a) vergrößernden Verstärkungsrippe (3c) versehen ist.

5. Großräumiges Fahrzeug nach einem der Ansprüche 1 bis 4, **dadurch gekennzeichnet, daß** im Übergangsbereich des Fahrzeugkopfes (2) und seines nach innen gerichteten umlaufenden Schenkels (2a) ein metallisches Verstärkungsprofil (2b) einlaminiert ist.

## Claims

1. Large sized vehicle, especially rail vehicle, having a car body body shell (1) made of metal and a vehicle header module (2) made of fibre-reinforced plastic which is connected to the body shell (1) by bonding, **characterized in that** a section (3) which is embodied as a gantry with a U-shaped receptacle (3a) which is open towards the outside and into which an inwardly directed circumferential limb (2a) of the vehicle head module (2) engages and is bonded is attached to the body shell (1).

2. Large sized vehicle according to Claim 1, **characterized in that** there is a gap (4, 5) on both sides between the U-shaped receptacle (3a) of the gantry-like section (3) and the circumferential limb (2a) of the vehicle head module (2), these gaps (4, 5) being filled by adhesive (6).

3. Large sized vehicle according to Claim 2, **characterized in that** the U-shaped receptacle (3a) of the gantry-like section (3) has drilled holes (3b) - arranged distributed over its circumference - for filling the gaps (5) with adhesive (6).

4. Large sized vehicle according to one of Claims 1 to 3, **characterized in that** the gantry-like section (3) is provided with a reinforcing rib (3c) which increases the flexural rigidity of its U-shaped receptacle (3a).

5. Large sized vehicle according to one of Claims 1 to 4, **characterized in that** a metallic reinforcement section (2b) is laminated into the junction region between the vehicle head module (2) and its inwardly directed circumferential limb (2a).

## Revendications

1. Véhicule à grande capacité, en particulier un véhicule sur rails, comportant une structure de caisse (1) en métal et une tête de véhicule (2) en matière plastique renforcée de fibres qui est reliée par collage à la structure (1), **caractérisé en ce que** l'on fixe sur la structure (1) un profilé réalisé en tant que portique comportant un logement en U (3a) ouvert vers l'extérieur dans lequel pénètre et est collée une branche (2a), faisant le tour et dirigée vers l'intérieur, de la tête de véhicule (2).

2. Véhicule à grande capacité selon la revendication 1, **caractérisé en ce qu'**entre le logement en U (3a) du profilé en portique (3) et la branche (2a) faisant le tour de la tête de véhicule (2) il y a des deux côtés un intervalle (4, 5), ces intervalles (4,5) étant remplis de matière adhésive (6).

3. Véhicule à grande capacité selon la revendication 2, **caractérisé en ce que** le logement en U (3a) du profilé en portique (3) présente sur son pourtour des forures (3b) disposées de façon à être régulièrement réparties et destinées à remplir l'intervalle (5) de matière adhésive (6).

4. Véhicule à grande capacité selon l'une des revendications 1 à 3, **caractérisé en ce que** le profilé en portique (3) est muni d'une nervure de renforcement (3c), qui augmente la résistance à la flexion de son logement en U (3a).

5. Véhicule à grande capacité selon l'une des revendications 1 à 4, **caractérisé en ce que** dans la zone de transition de la tête de véhicule (2) et de sa branche (2a), faisant le tour et dirigée vers l'intérieur, on introduit un profilé de renforcement (2b) métallique.
